Europäisches Patentamt

European Patent Office

Office européen des brevets

(11) Publication number: **0 626 654 A2**

## EUROPEAN PATENT APPLICATION

(21) Application number: **94108081.4**

(22) Date of filing: **25.05.94**

(51) Int. Cl.5: **G06F 15/70, G01C 3/08**

(30) Priority: **25.05.93 JP 147026/93**

(43) Date of publication of application:
**30.11.94 Bulletin 94/48**

(84) Designated Contracting States:
**DE FR GB IT SE**

(71) Applicant: **MATSUSHITA ELECTRIC INDUSTRIAL CO., LTD**
**1006, Oaza Kadoma,**
**Kadoma-shi**
**Osaka 571 (JP)**

(72) Inventor: **Suzuki, Akihiro**
**224-4, Aza Ookoshi Gogazuka**
**Itami-shi, Hyogo-ken 664 (JP)**

(74) Representative: **Patentanwälte Grünecker,**
**Kinkeldey, Stockmair & Partner**
**Maximilianstrasse 58**
**D-80538 München (DE)**

(54) **Apparatus for measuring intervehicle distance by stereo vision.**

(57) Horizontal edges, vertical edges, symmetrical axes, T-shaped edges, +-shaped edges, L-shaped edges, □-shaped eges, part of a preceding vehicle and the like are extracted as a vehicle characteristic in images picked up from two video cameras mounted to a vehicle, and a disaprity is determined by utilizing of the correspondece relationship of the exracted vehicle characteristic, thereby measuring a distance to the preceding vehicle.

Fig. 1

## BACKGROUND OF THE INVENTION

1. Field of the Invention

The present invention relates to an apparatus for measuring intervehicle distance.

2. Description of the Prior Art

Conventional distance measuring apparatus using stereo vision include an apparatus disclosed by A. Grumet in U.S.Pat. No. 4,601,053. In the patent, A. Grumet describes the apparatus in which part of an object to be measured is set as a reference in one of two images obtained by two view points having a spacing between them in the horizontal direction, and searching a horizontal brightness arrangement similar to the reference in the other image causes a disparity as a shift in the horizontal direction to be determined, whereby a distance to the object is calculated by the determined disparity.

However, such conventional distance measuring apparatus have performed a processing using only brightness information, so that it has been difficult to set and limit a reference to a preceding vehicle, which reference is required for measuring intervehicle distance.

## SUMMARY OF THE INVENTION

An object of the present invention is to provide an apparatus for measuring intervehicle distance, by which a reference on a preceding vehicle essential for the intervehicle distance measurement using stereo vision is provided in an image, thereby allowing a distance to the preceding vehicle to be positively measured.

An intervehicle distance measuring apparatus of the present invention has:

image memories for storing right/left or upper/lower imagas picked up from image pick-up means for picking up a preceding vehicle,

a vehicle characteristic extraction section for extracting a vehicle characteristic from the respective images stored in the image memories,

a correspondence searching section for determining a correspondence relationship between these images of the extracted vehicle characteristic,

a disparity calculation section for determining a disparity as a shift between these images , of the vehicle characteristic determined for correspondence relationship, and

a distance calculation section for calculating a distance to the preceding car by a use of the determined disparity.

## BRIEF DESCRIPTION OF THE DRAWINGS

Fig.1 is a block diagram showing the basic composition of an intervehicle distance measuring apparatus of one embodiment according to the present invention.

Fig.2 is a sketch view showing an example of installation of video cameras to a vehicle.

Fig.3 is a flowchart of the operation of the same intervehicle distance measuring apparatus.

Fig.4 is an illustrative view showing stereo images picked up by the video cameras of the same intervehicle distance measuring apparatus.

Fig.5 is an illustrative view showing processing regions set in the stereo images of the same intervehicle distance measuring apparatus.

Fig.6 is edge images showing horizontal edges extracted in the processing regions.

Fig.7 is images showing horizontal edges approximated in straight line.

Fig.8 is a display screen outputting measured intervehicle distance results onto a CRT.

Fig.9 is images showing vertical edge components extracted on the horizontal edges.

Fig.10 is an illustrative view of symmetrical points extraction processing.

Fig.11 is a histogram accumulating distributions of the symmetrical points.

Fig.12 is images showing symmetrical points extracted on the horizontal edge.

Fig.13 is images showing extracted symmetrical axes.

Fig.14 is edge images showing vertical edges extracted in processing regions.

Fig.15 is images showing vertical edges approximated in straight line.

Fig.16 is images showing extracted, circumscribed profiles.

Fig.17 is edge images of a preceding vehicle.

2

Fig.18 is images showing extracted T-shaped edges.
Fig.19 is images showing extracted □-shaped edges.
Fig.20 is images showing extracted tail lamps.

## DESCRIPTION OF THE PREFERRED EMBODIMENTS

With reference to drawings, preferred embodiments of the present invention will be explained hereinafter.

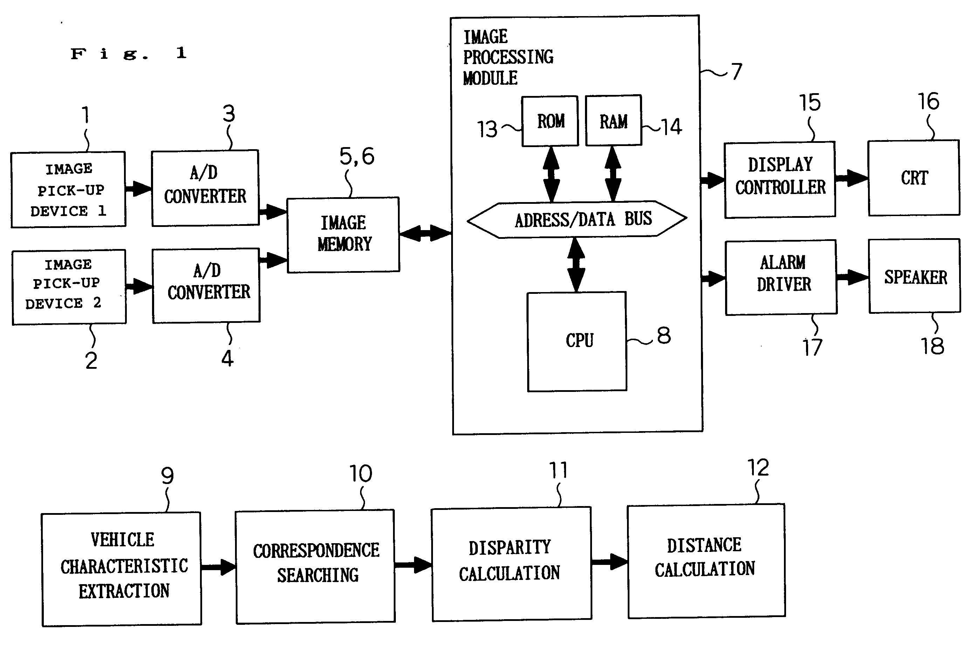

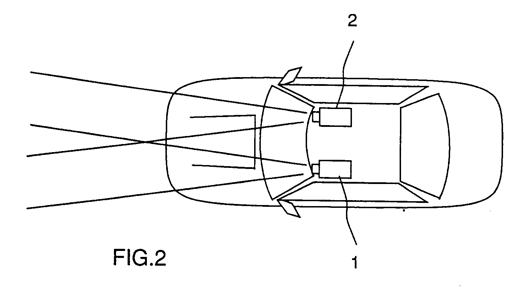

Fig.1 is a block diagram showing the composition of an intervehicle distance measuring apparatus in a preferred embodiment of the present invention. In Fig.1, video cameras 1 and 2 are used to pick up images in front of a vehicle. The two video cameras are installed at a certain interval, and their installing direction is preferably such that the optical axes of the video cameras are parallel to each other. Preferably, in order to obtain easily the correspondece between images, they are installed side by side in the horizontal or vertical direction with respect to the surface of a road. This embodiment will be explained assuming that the two video cameras are installed in the horizontal or vertical direction with respect to the surface of a road. Fig. 2 shows an example in which the video cameras 1 and 2 are mounted to the ceiling inside a vehicle. A/D converters 3 and 4 are used to convert images picked up from the two video cameras from analog signals to digital ones, and the converted images are stored in image memories 5 and 6. The numeral 7 indicates an image processing module comprising mainly a microprocessor 8, which performs a processing for the image date stored in the image memories 5 and 6. The main processing in this embodiment is performed in four sections, a vehicle characteristic extraction section 9, a correspondence searching section 10, a disparity calculation section 11, and a distance calculation section 12, all of which have been implemented as programs of the microprocessor 8. In the vehicle characteristic extraction section 9, a vehicle characteristic is extracted, and in the correspondence searching section 10, a relationship in correspondence between two images of the extracted vehicle characteristic is determined. The vehicle characteristic in which the correspondence relationship has been determined is used to calculate a disparity in the disparity calculation section 11, and the distance calculation section 12 calculates a distance to a preceding vehicle by the use of the calculated disparity. When the apparatus is started, these programs are loaded from a ROM 13 into the microprocessor 8. A RAM 14 is a calculation region available for each processing. The calculated intervehicle distance is displayed through a display controller 15 on a CRT 16. Where the distance calculation section 12 calculates an intervehicle distance shorter than that previously set, an audio alarm is outputted through an alarm driver 17 from a speaker 18.

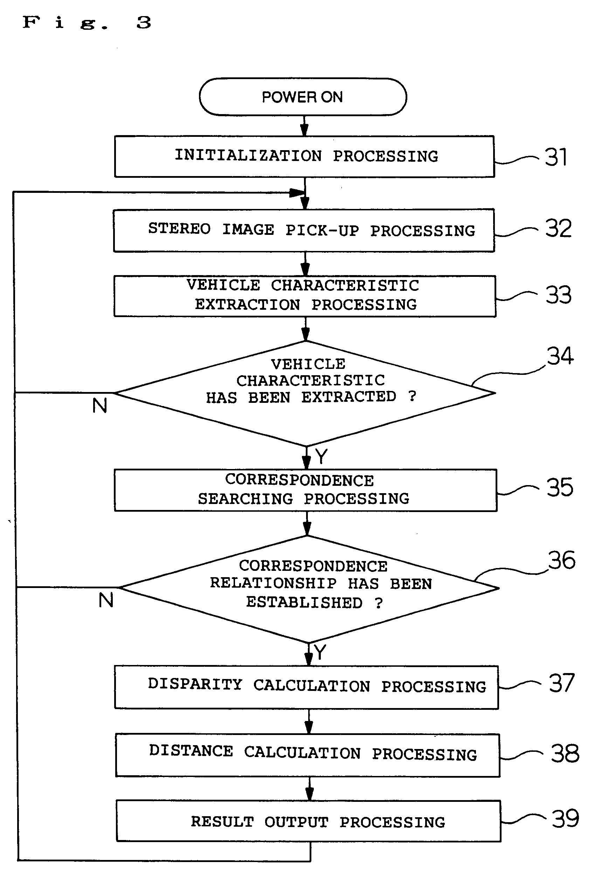

In the above-mentioned composition, with reference to Fig. 3, its operation will be explained.

First, when the apparatus is started, at the step 31, the apparatus is initialized. In the initialization processing, the CRT 16 and the speaker 18 are initialized, and programs are loaded from the ROM 13 to the microprocessor 8.

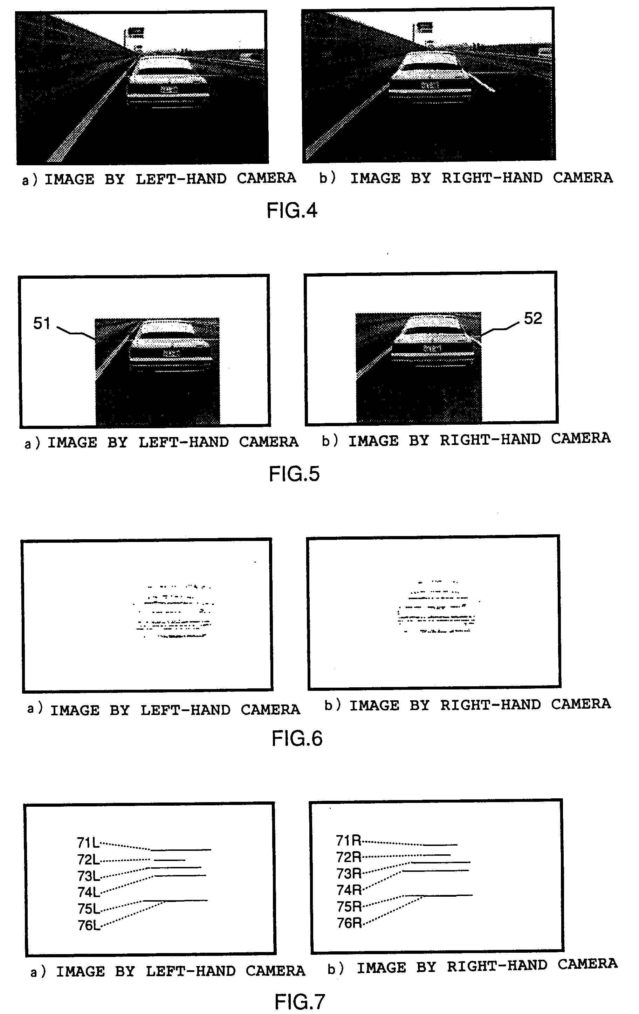

Then the process proceeds to the step 32, at which stereo image pick-up processing is performed. At this step, images in front of the vehicle are picked up as a pair of stereo images from the video cameras 1 and 2. The picked-up respective images are A/D converted by the A/D converters 3 and 4, and then stored in the image memories 5 and 6. Fig. 4 shows a pair of stereo images picked up from the video cameras 1 and 2.

Then the process proceeds to the step 33, at which vehicle characteristic extraction processing is performed by the vehicle characteristic extraction section 9. In this embodiment, in order to utilize the fact that the preceding vehicle picked up in the images includes many horizontal edges, a case where the horizontal edges are used for the vehicle characteristic is shown. Although any edge extraction filter well known in the image processing field may be used to extract the horizontal edges, a sobel filter most well known in the image processing field is used herein to extract pixels exceeding a specified threshold as the horizontal edges. The region in an image in which the preceding vehicle having a possiblity of rear-end collision is picked up can be limited, so that whole of the image is not required to process, and thus it is preferable that the processing region for vehicle characteristic extraction is previously limited as shownin Fig. 5. In Fig. 5, the numerals 51 and 52 are limited processing regions with respect to the stereo images shown in Fig. 4, and Fig. 6 shows the horizontal edges extracted from the processing regions 51 and 52.

Then the process proceeds to the step 34, at which whether the vehicle characteristic has been extracted is checked. This judgment is performed by checking whether the number of pixels extracted as horizontal edges exceeds a specified value. Now, where the number of pixels extracted as horizontal edges is less than the specified value, the process judges that the preceding vehicle is not present, and returns to the step 32, at which the next stereo images are picked up. Where the number of pixels extracted as horizontal edges is the specified value or more, the process proceeds to the step 35.

3

At the step 35, correspondence searching processing is performed by the correspondence searching section 10. In this embodiment using the horizontal edges for the vehicle characteristic, the results of vehicle characteristic extraction processing is given as the distribution of horizontal edge pixels as shown in Fig. 6, so that it is preferable that the horizontal edges are approximated in straight line in order to obtain easily the correspondence relationship. Where point lines are approximated in straight line, the method of least squares as a mathematical technique, or the Hough transformation disclosed in U.S. Pat. No. 3,069,654 (1962) may be used. Fig. 7 shows the results obtain by performing Hough transformation on the horizontal edge extraction results shown in Fig. 6 and performing the straight line approximation on them. In Fig. 7, 71L through 76L and 71R through 76R are straight-line approximated horizontal edges. Where two video cameras are installed horizontally with respect to the surface of a road in such a manner that their optical axes become parallel to each other as shown in this embodiment, the positions from the lower end of horizontal edge images corresponding between two images are substantially matched to each other. Therefore, where the difference in the distance from the image lower end between the horizontal edges of the two images is within a specified range, the correspondence relationship can be judged to be established. In Fig. 7, 71L and 71R, 72L and 72R, 73L and 73R, 74L and 74R, 75L and 75R, 76L and 76R correspond to each other, respectively. Now, if there is horizontal edges not corresponding to each other, they are deleted from the data.

Then the process proceeds to the step 36, at which whether a pair of horizontal edges corresponding to each other are present is checked. Where a pair of horizontal edges corresponding to each other are not present, the process returns to the step 32, at which the next stereo images are picked up. Where a pair of horizontal edges corresponding to each other are present, the process proceeds to the step 37.

At the step 37, disparity calculation processing is performed by the disparity calculation section 11. A correlation coefficient using the brightness on horizontal edges may be utilized to calculate the disparity. The correlation coefficient Si for a pair of the "i"th horizontal edges is calculated by the following equation

$$Si\,(x) = \sum_{j=0}^{n} |\,pl\,(j) - pr\,(j+x)\,| \qquad \cdots (1)$$

In the equation(1), x is the shift in the horizontal direction; n is the number of pixels in the horizontal direction in the processing region shown in Fig. 5; pl (j) is the brightness of the "j"th pixel on the scanning line on which the "i"th horizontal edge having correspondence relationship of an image as a reference is present; and pr (j) is the brightness of the "j"th pixel on the scanning line on which the "i"th horizontal edge having correspondence relationship of the other image is present. As apparent from the equation (1), where two images are most matched to each other, the correlation coefficient gives the minimum value. Therefore, the shift x where the correlation coefficient gives the minimum value can be calculated as the vehicle disparity d (i) between two images. Now, although the disparity d (i) is obtained by only the number of pairs of horizontal edges having correspondence relationship, in order to obtain the distance closest to the preceding vehicle, the disparity having the largest shift among the d (i) is taken as an output dmax from this process.

Then the process proceeds to the step 38, at which distance calculation processing is performed by the distance calculation section 12. A distance D is calculated by the following equation (2) which uses the disparity dmax and utilizes the principle of triangulation:

$$D = \frac{L \cdot f}{dmax \cdot C} \qquad \cdots (2)$$

In the equation(2), L is the installation spacing of two video cameras; f is the focal distance of the lense mounted to the video cameras; and C is a constant for converting the disparity to a distance corresponding to actual reality.

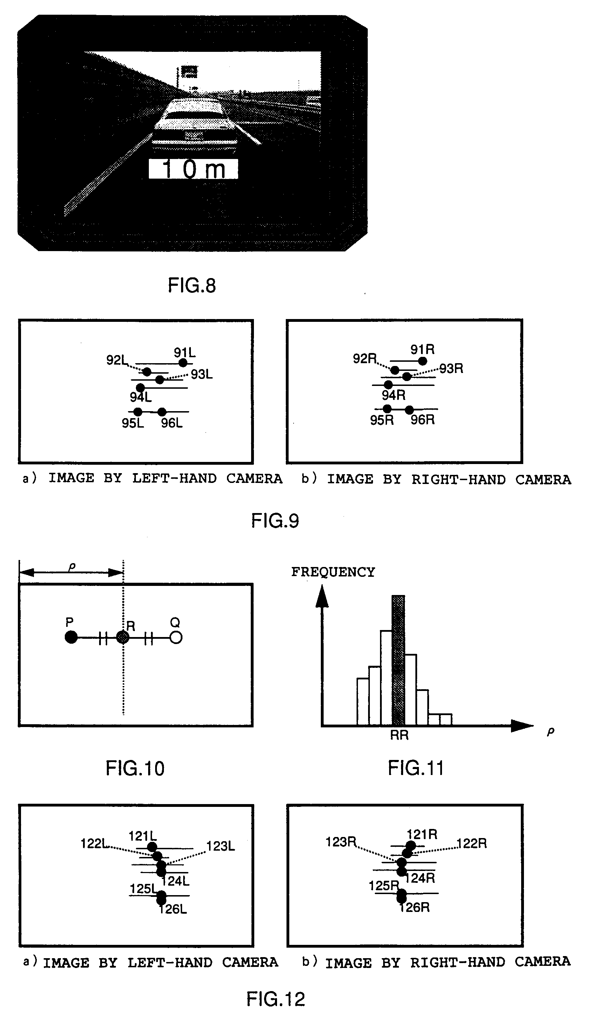

Then the process proceeds to the step 39, at which the intervehicle distance calculated by result output processing is outputted. The results can be outputted through the display controller 15 in such a manner that an image plane obtained by superimposing of the intervehicle distance on the image from one video

4

camera is displayed on the CRT 16. At this point, displaying the intervehicle distance near the place at which the vehicle characteristic has been extracted allows a driver to be notified of the vehicle subject to observation. Fig. 8 shows an example of result display on the CTR. Where the intervehicle distance calculated in the distance calculation section 12 is less than a specified distance,an alarm sounds through the alarm driver 17 from the speaker 18, thereby allowing the driver's attention to be drawn.

Then, another embodiment will be explained where the horizontal edges are used for the vehicle characteristic, and the vertical edge components on the horizontal edges are utilized for the disparity calculation processing at the step37; provided that the process to the step 36 is the same as the above-mentioned embodinet, and thus the data up to the horizontal edge correspondence relationship has been determined.

Similar to the horizontal edge extraction, in order to detect the vertical edge components on the horizontal edges, the above-mentioned edge extaction filter may also be used. However, in this case, the edge extaction filter needs only to be operated on the horizontal edges, so that the pixels on the horizontal edges, whose edge intensity in the vertical direction is more than a specified threshold, are extracted. Fig. 9 shows the vertical edge components on the horizontal edges extracted by the use of the sobel filter. In Fig. 9, 91L through 96L and 91R through 96R are the extracted vertical edge components on the horizontal edges. Then, the shift between two images in the horizontal direction at the position of the vertical edge components are detetmined for each horizontal edge, and the determined shift is taken as the disparity d (i). Now, where one or more vertical edge components on the corresponding horizontal edges are present, the average of the shifts obtained from a combination having the least dispersion in the shift among all combinations is employed as the disparity d(i). Now, although the disparity d (i) is obtained by only the number of pairs of horizontal edges establishing correspondence relationship similarly to the above-mentioned embodiment, in order to obtain a distance closest to the preceding vehicle, the disparity having the largest shift among the d (i) is taken as the output dmax from the process, and then, in a similar manner to the above-mentioned embodiment, the intervehicle distance is calculated and the calculated results are outputted.

Then, another embodiment will be explained where the horizontal edges are used for the vehicle characteristic, and the symmetrical points on the horizontal edges are utilized for the disparity calculation processing at the step 37; provided that the process to the step 36 is the same as the above-mentioned embodiment, and thus the data up to the horizontal edge correspondence relationship has been determined.

The symmetrical points on the horizontal edges can be extracted by the use of the ditribution of the edge pixels on the horizontal edges. With reference to Figs. 10 and 11,the extraction processing of the symmetrical points will be explained. First, as shown in Fig. 10, an edge pixel on the horizontal edge is taken as a reference point P. Then, a mid point R between the reference point P and the other edge pixel Q is taken as a symmetrical point candidate, and a position $\rho$ of the point R in the image is caused to be accumulated in a histogram as shown in Fig. 11. Such accumulation is performed with all combinations of the edge pixels on the horizontal edges so as to prepare the histogram as shown in Fig. 11. At this point, the frequency at the highest symmetry position gives the maximum value, so that the position can be extracted as the symmetrical point on the horizontal edges. In Fig. 11, a positon RR becomes the symmetrical point. Fig. 12 shows the results obtained by performing the symmetrical point extraction processing with each horizontal edge shown in Fig. 7. In Fig. 12, 121L through 126L and 121R through 126R are symmetrical points extracted with respect to respective horizontal edges.

Thus, where the symmetrical point on the horizontal edges are used, the symmetrical point on the horizontal edges establishing correspondece relationship corrspond to each other as they are. Therefore, the disparity d (i) with respect to each pair of horizontal edges can be obtained as the shift of the symmetrical points between two images. Now, although the disparity d (i) is obtained by only the number of pairs of horizontal edges establishing correspondence relationship similarly to the above-mentioned embodiemnt, in order to obtain a distance closest to the preceding vehicle, the disparity having the largest shift among the d (i) is taken as the output dmax from the process, and then, in a similar manner to the above-mentioned embodiment, the intervehicle distance is calculated and the calculated results are outputted.

Then, another embodiment will be explained where the symmetrical axes are used for the vehicle characteristic; provided that the process to the step 32 is the same as the above-mentioned embodiment, and thus the stereo images have been picked up.

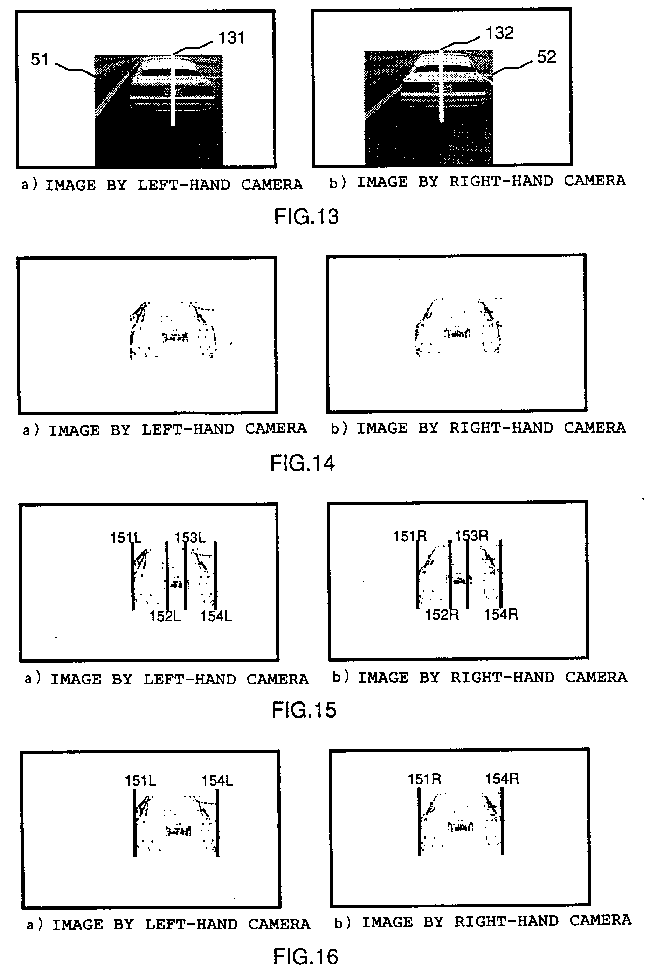

Then, in this embodiment, at the step 33, the vehicle characteristic extraction section 9 performs the vehicle characteristic extraction processing to extract the symmetrical axes as the vehicle characteristic. The symmetrical axes can be extracted by applying the above-mentioned technique for determining the symmetrical points on the horizontal edges, as it is, to whole processing regions. That is, all histograms accumulated for each scanning line within the processing region are added to each other, and a position having the largest frequency among the added results is extracted as a symmetrical axis. Fig. 13 shows the results obtained by extacting edge pixels from the images shown in Fig. 5 and determining the symmetrical axes. In Fig. 13, the numerals 131 and 132 are the symmetrical axes.

Then the process proceeds to the step 34, at which whether the vehicle characteristic has been extracted is checked. The judgement can be made by the use of the largest freqency of the histogram in such a manner that where the largest freqency is less than a specified value, the characteristic is judged to have not been extracted, so that the process returns to the step 32, while where the largest freqency is larger than the value, the process proceeds to the step 35.

Where the the symmetrical axes of the preceding vehicle are used, only one symmetrical axis is extracted for each image, so that the extracted symmetrical axes have correspondence relationship as they are, thereby allowing the correspondence searching processing at the step 35 to be skipped. Therefore, the process, as it is, proceeds to the step 36, at which the shift, as it is, in the position of the symmetrical axes between two images can be taken as the disparity dmax. Then, in a similar manner to the above-mentioned embodiment, the intervehicle distance is calculated by the use of the the disparity dmax and the calculated results are outputted.

Then, another embodiment will be explained where the vertical edges are used for the vehicle characteristic; provided that the process to the step 32 is the same as the above-mentioned embodiment, and thus the stereo images have been picked up.

Then, in this embodiment, at the step 33, the vehicle characteristic extraction section 9 performs the vehicle characteristic extraction processing to extract the vertical edges as the vehicle characteristic. The vertical edges can be extracted by the use of the above-mentioned edge extraction filter in a similar manner to the above-mentioned embodiment using the horizontal edges as the vehicle characteristic. Fig. 14 shows the vertical edges extracted from the images shown in Fig. 5 by the use of the sobel filter.

Then the process proceeds to the step 34, at which whether the vehicle characteristic has been extracted is checked. In a similar manner to the above-mentioned embodiment using the horizontal edges as the vehicle characteristic, the judgement can be made by checking whether the number of the pixels exracted as the vertical edges exceeds a specified value. Now, where the number of the pixels exracted as the vertical edges is less than the specified value, the preceding vehicle is judged to be not present, so that the process returns to the step 32, at which the next stereo images are picked up. Where the number of the pixels exracted as the vertical edges is larger than the specified value, the process proceeds to the step 35.

Although at the step 35, the correspondence searching processing is performed by the correspondence searching section 10, in also the step 35, it is preferable that in a similar manner to the embodiment using the horizontal edges, the distribution of the edge pixels is replaced with approximated straight lines by the use of a technique such as the Hough transformation. In Fig. 15, 151L through 154L and 151R through 154R are straight line approximated vertical edges. Now, a combination having the least dispersion in the shift among all combinations is empolyed, thereby allowing the correspondence relationship to be obtained. In Fig. 15, 151L and 151R, 152L and 152R, 153L and 153R, and 154L and 154R become pairs having the correspondece relationship, respectively. Now, where a vertical edge not establishing the correspondece relationship is present, the edge is deleted from the data.

Then the process proceeds to the step 36, at which although the disparity d (i) is determined from each combination, in order to obtain a distance closest to the preceding vehicle, the disparity having the largest shift among the d (i) is taken as the output dmax from the process. Then, in a similar manner to the above-mentioned embodiment, the intervehicle distance is calculated by the use of the disparity dmax and the calculated results are outputted.

Then, another embodiment will be explained where circumscribed profiles are further determined as the vehicle characteristic from the vertical edges; provided that the process to the step 34 is the same as the above-mentioned embodiment, and that at the step 33, the vertical edges have been approximated in staight lines.

In the step 33, among the staight-line approximated vertical edges, the two lines closest to the right and left image ends are selected as circumscribed profiles. In the example as shouwn in Fig. 15, 151L and 154L, and 151R and 154R are extracted as circumscribed profiles, respecively. Fig. 16 shows the circumscribed profiles extracted from the vertical edges shown in Fig. 15.

Then, although at the step 35, the correspondence searching processing is performed by the correspondence searching section 10, the correspondence is determined immediately from the positional relationship of the extracted circumscribed profiles. However, where the distances between the two circumscribed profile lines of two images is largely different from each other, the circumscribed profiles having the larger shift than the other profiles of two images is deleted.

Then the process proceeds to the step 36, at which although the disparity d (i) is determined from each combination of the circumscribed profiles, in order to obtain a distance closest to the preceding vehicle, the disparity having the largest shift among the d (i) is taken as the output dmax from the process. Then, in a similar manner to the above-mentioned embodiment, the intervehicle distance is calculated by the use of the disparity dmax and the calculated results are outputted.

Then, another embodiment will be explained where T-shaped, +-shaped and/or L-shaped edges are used for the vehicle characteristic; provided that the process to the step 32 is the same as the above-mentioned embodinet, and thus the stereo images have been picked up.

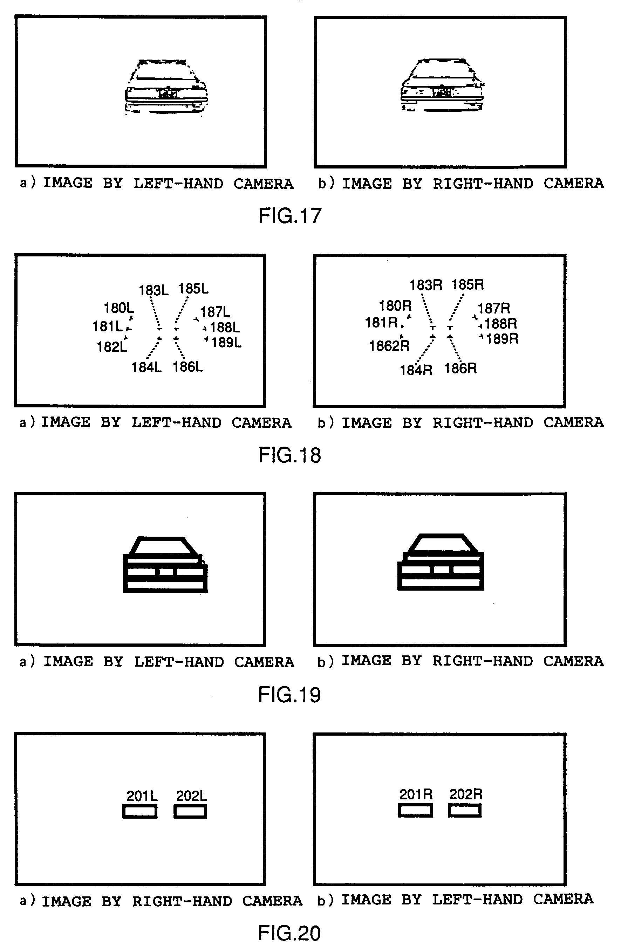

Then, in this embodiment, at the step 33, the vehicle characteristic extraction section 9 performs the vehicle characteristic extraction processing to extract the T-shaped, +-shaped and/or L-shaped edges as the vehicle characteristic. The edges having such shapes can be extracted by such a technique disclosed by Nakayama et al. in "Use of T-junction for Reliable Stereo Matching" (IEEE/RSJ INTERNATIONAL CONFERENCE ON IROS '92, p.2169-2176). Fig. 17 shows edge images of the preceding vehicle; and Fig. 18 shows T-shaped edges extracted from the edges images of Fig. 17. In Fig. 18, 180L through 189L and 180R through 189R are the extracted T-shaped edges.

Then the process proceeds to the step 34, at which whether the vehicle characteristic has been extracted is checked. The judgement is made by checking whether T-shaped, +-shaped and/or L-shaped edges have been extracted in two images. Now, where the vehicle characteristic has not been extracted in two images, the preceding vehicle is judged to be not present, so that the process returns to the step 32, at which the next stereo images are picked up. Where the vehicle characteristic has been extracted in two images, the process proceeds to the step 35.

At the step 35, the correspondence searching processing is performed by the correspondence searching section 10. The correspondence searching in this embodiment is performed by employing a combination having the least dispersion in the shift among all combinations between the two images of the extracted vehicle characteristic. Now, the vehicle characteristic having not established correspondece relationship is deleted. In Fig. 18, 180L and 180R, 181L and 181R, 182L and 182R, 183L and 183R, 184L and 184R, 185L and 185R, 186L and 186R, 187L and 187R, 188L and 188R, and 189L and 189R become pairs having the correspondece relationship, respectively.

Then the process proceeds to the step 36, at which although the disparity d (i) is determined from each combination of the T-shaped, +-shaped or L-shaped edges in order to obtain a distance closest to the preceding vehicle, the disparity having the largest shift among the d (i) is taken as the output dmax from the process. Then, in a similar manner to the above-mentioned embodiemnt, the intervehicle distance is calculated by the use of the the disparity dmax and the calculated results are outputed.

Then, another embodiment will be explained where □-shaped edges are used for the vehicle characteristic. Utilizing the □-shaped edge allows a licence plate, tail lamps, a rear windshield, a hood, a rear bumper and the like as part of the preceding vehicle to be extracted, so that a case where the tail lamps are used for the vehicle characteristic will be shown in this embodiment.

First, the process to the step 32 is the same as the above-mentioned embodiments, thus assuming that stereo images have been picked up.

Then, in this embodiment, at the step 33, the vehicle characteristic extraction section 9 performs the vehicle characteristic extraction processing to extract the □-shaped edges as the vehicle characteristic. The edges having such shapes can be extracted by combining the horizontal edges with the vertical eges used in the above-mentioned embodiments. In order to correspond also to the edes whose shape is trapezoidal in the image, such as the rear windshield, a template is previously prepared to perform matching process, thereby allowing the vehicle characteristic to be extracted. Fig. 19 shows □-shaped edges extracted from the edge images of Fig. 17. Now, the extracted rectangular region is classified, in the order from the upper portion to lower of the image, into the rear windshield, the hood, the tail lamps and the licence number, and the rear bumper. Particulary for the tail lamps, two regions having substantially the same area are present side by side in the horizontal direction, so that they can be taken out as a pair. In this manner, with the results obtain by first extracting the tail lamps taken as a reference, other portions can be sequentially idntified. Fig. 20 shows the results obtained by extracting only the tail lamps.

Then the process proceeds to the step 34, at which whether the vehicle characteristic has been extracted is checked. Now, where the vehicle characteristic has not been extracted in two images, the preceding vehicle is judged to be not present, so that the process returns to the step 32, at which the next stereo images are picked up. Where the vehicle characteristic has been extracted in two images, the process proceeds to the step 35.

At the step 35, the correspondence searching processing is performed by the correspondence searching section 10. The correspondence in this embodiment is immdiately determined by the area and positional relationship of the extracted rectangular region.

Then the process proceeds to the step 36, at which although the disparity d (i) is determined from each combination of the □-shaped edges, in order to obtain a distance closest to the preceding vehicle, the disparity having the largest shift among the d (i) is taken as the output dmax from the process. Then, in a similar manner to the above-mentioned embodiment, the intervehicle distance is calculated by the use of the the disparity dmax and the calculated results are outputted.

**Claims**

1. An intervehicle distance measuring apparatus comprising:

   image memories for storing right/left or upper/lower imagas picked up from image pick-up means for picking up a preceding vehicle,

   a vehicle characteristic extraction section for extracting a vehicle characteristic from the respective images stored in the image memories,

   a correspondence searching section for determining a correspondence relationship between these images of the extracted vehicle characteristic,

   a disparity calculation section for determining a disparity as a shift between these images , of the vehicle characteristic determined for correspondence relationship, and

   a distance calculation section for calculating a distance to the preceding car by a use of the determined disparity.

2. An intervehicle distance measuring apparatus as set forth in claim 1, wherein
   horizontal edges are used as the vehicle characteristic.

3. An intervehicle distance measuring apparatus as set forth in claim 2, wherein
   the disparity is calculated by the use of a brightness correlation on the horizontal edges.

4. An intervehicle distance measuring apparatus as set forth in claim 2, wherein
   the disparity is calculated by the use of vertical edge components distributed on the horizontal edges.

5. An intervehicle distance measuring apparatus as set forth in claim 2, wherein
   the disparity is calculated by the use of symmetrical points obtained from the edge distribution on the horizontal edges.

6. An intervehicle distance measuring apparatus as set forth in claim 1, wherein
   symetrical axes of a vehicle are used as the vehicle characteristic.

7. An intervehicle distance measuring apparatus as set forth in claim 1, wherein
   vertical edges are used as the vehicle characteristic.

8. An intervehicle distance measuring apparatus as set forth in claim 7, wherein
   the disparity is calculated by the use of the distribution of positions of the vertical edge .

9. An intervehicle distance measuring apparatus as set forth in claim 7, wherein
   the disparity is calculated by the use of circumscribed profiles determined from the vertical edges.

10. An intervehicle distance measuring apparatus as set forth in claim 1, wherein
    T-shaped edges are used as the vehicle characteristic.

11. An intervehicle distance measuring apparatus as set forth in claim 1, wherein
    +-shaped edges are used as the vehicle characteristic.

12. An intervehicle distance measuring apparatus as set forth in claim 1, wherein
    L-shaped edges are used as the vehicle characteristic.

13. An intervehicle distance measuring apparatus as set forth in claim 1, wherein
    □-shaped edges are used as the vehicle characteristic.

**14.** An intervehicle distance measuring apparatus as set forth in claim 1, wherein
a part of the preceding vehicle is extracted and used as the vehicle characteristic.

**15.** An intervehicle distance measuring apparatus as set forth in claim 14, wherein
a licence plate is used as the part of the preceding vehicle to be extacted.

**16.** An intervehicle distance measuring apparatus as set forth in claim 14, wherein
tail lamps are used as the part of the preceding vehicle to be extracted.

**17.** An intervehicle distance measuring apparatus as set forth in claim 14, wherein
a rear windshield is used as the part of the preceding vehicle to be extracted.

**18.** An intervehicle distance measuring apparatus as set forth in claim 14, wherein
a hood is used as the part of the preceding vehicle to be extracted.

**19.** An intervehicle distance measuring apparatus as set forth in claim 14, wherein
a rear bumper is used as the part of the preceding vehicle to be extracted.

Fig. 1

IMAGE PROCESSING MODULE — 7

- IMAGE PICK-UP DEVICE 1 — 1
- IMAGE PICK-UP DEVICE 2 — 2
- A/D CONVERTER — 3
- A/D CONVERTER — 4
- IMAGE MEMORY — 5,6
- ROM — 13
- RAM — 14
- ADRESS/DATA BUS
- CPU — 8
- DISPLAY CONTROLLER — 15
- CRT — 16
- ALARM DRIVER — 17
- SPEAKER — 18

- VEHICLE CHARACTERISTIC EXTRACTION — 9
- CORRESPONDENCE SEARCHING — 10
- DISPARITY CALCULATION — 11
- DISTANCE CALCULATION — 12

FIG.2

Fig. 3

```
                    ┌──────────────────┐
                    │     POWER ON     │
                    └──────────────────┘
                             │
                             ▼
            ┌─────────────────────────────────┐
            │    INITIALIZATION PROCESSING    │───── 31
            └─────────────────────────────────┘
                             │
                             ▼
            ┌─────────────────────────────────┐
            │  STEREO IMAGE PICK-UP PROCESSING │───── 32
            └─────────────────────────────────┘
                             │
                             ▼
            ┌─────────────────────────────────┐
            │    VEHICLE CHARACTERISTIC        │───── 33
            │    EXTRACTION PROCESSING         │
            └─────────────────────────────────┘
                             │
                             ▼
                      ╱─────────────╲
                    ╱    VEHICLE      ╲
          N       ╱  CHARACTERISTIC    ╲───── 34
        ◄────────╲ HAS BEEN EXTRACTED ? ╱
                   ╲                   ╱
                    ╲─────────────────╱
                             │ Y
                             ▼
            ┌─────────────────────────────────┐
            │      CORRESPONDENCE             │───── 35
            │    SEARCHING PROCESSING         │
            └─────────────────────────────────┘
                             │
                             ▼
                      ╱─────────────╲
                    ╱  CORRESPONDENCE ╲
          N       ╱ RELATIONSHIP HAS BEEN ╲───── 36
        ◄────────╲    ESTABLISHED ?   ╱
                   ╲                 ╱
                    ╲───────────────╱
                             │ Y
                             ▼
            ┌─────────────────────────────────┐
            │  DISPARITY CALCULATION PROCESSING │───── 37
            └─────────────────────────────────┘
                             │
                             ▼
            ┌─────────────────────────────────┐
            │  DISTANCE CALCULATION PROCESSING  │───── 38
            └─────────────────────────────────┘
                             │
                             ▼
            ┌─────────────────────────────────┐
            │    RESULT OUTPUT PROCESSING      │───── 39
            └─────────────────────────────────┘
```

a) IMAGE BY LEFT-HAND CAMERA    b) IMAGE BY RIGHT-HAND CAMERA

FIG.4

a) IMAGE BY LEFT-HAND CAMERA    b) IMAGE BY RIGHT-HAND CAMERA

FIG.5

a) IMAGE BY LEFT-HAND CAMERA    b) IMAGE BY RIGHT-HAND CAMERA

FIG.6

a) IMAGE BY LEFT-HAND CAMERA    b) IMAGE BY RIGHT-HAND CAMERA

FIG.7

FIG.8

a) IMAGE BY LEFT-HAND CAMERA    b) IMAGE BY RIGHT-HAND CAMERA

FIG.9

FIG.10

FIG.11

a) IMAGE BY LEFT-HAND CAMERA    b) IMAGE BY RIGHT-HAND CAMERA

FIG.12

a) IMAGE BY LEFT-HAND CAMERA    b) IMAGE BY RIGHT-HAND CAMERA

FIG.13

a) IMAGE BY LEFT-HAND CAMERA    b) IMAGE BY RIGHT-HAND CAMERA

FIG.14

a) IMAGE BY LEFT-HAND CAMERA    b) IMAGE BY RIGHT-HAND CAMERA

FIG.15

a) IMAGE BY LEFT-HAND CAMERA    b) IMAGE BY RIGHT-HAND CAMERA

FIG.16

a) IMAGE BY LEFT-HAND CAMERA    b) IMAGE BY RIGHT-HAND CAMERA

FIG.17

a) IMAGE BY LEFT-HAND CAMERA    b) IMAGE BY RIGHT-HAND CAMERA

FIG.18

a) IMAGE BY LEFT-HAND CAMERA    b) IMAGE BY RIGHT-HAND CAMERA

FIG.19

a) IMAGE BY RIGHT-HAND CAMERA   b) IMAGE BY LEFT-HAND CAMERA

FIG.20